# EUROPEAN PATENT APPLICATION

(11) **EP 1 881 041 A1**
(43) Date of publication of application: **23.01.2008**
(21) Application number: 06425513.6
(22) Date of filing: 21.07.2006
(51) Int. Cl.: C09D 5/36, C09D 7/12

(54) **Method for exalting powder paint**

(71) Applicant: STEEL BELT SYSTEMS S.R.L., 20146 Milano (IT)
(72) Inventor: Calamara', Giovanni, 21100 Varese (IT); Virgilio, Gian Luigi, 21100 Varese (IT); Bragalini, Roberto, 20159 Milano (IT)
(74) Representative: Ponzellini, Gianmarco

(57) **Abstract**

It is disclosed a method of exalting powder paints in which a suitable amount of powder paint (2) is mixed with an exalting agent (3; 16) adapted to enrich the paint giving it particular qualitative and/or physicochemical features. The method is in particular adapted to give the paints their final appearance by addition of additives in the form of metal, mica, quartz, glass pigments, etc.

In accordance with the method, it is provided to continuously feed the mixing device (4) with the powder paint (2), and the exalting agent (3; 16) possibly premixed with the powder paint, the whole under safety and non-explosiveness conditions.

## Description

The present invention relates to a method of exalting powder paints.

Usually by "paint exalting" it is intended one of the methods aiming at enriching the paint appearance giving said paint particular aesthetic effects.

Within the range of possible effects, the most widely used exalting agents consist of metallising agents and of agents giving a shining and brilliant characteristic (a so-called "mica-effect") to the product.

Possible other effects can be obtained by adding different compound materials such as glasses, quartzes or still others.

It is known that presently exalting of powder paints takes place by means of systems working in a discontinuous manner, usually referred to as batch systems.

In particular, once the powder paint base to be treated has been provided, the latter is placed within a suitable mixer and, the exalting agent, powder aluminium for example, is further added in a predetermined proportion depending on the effect that is wished to be reached.

In particular, each time metallic powders are to be added, it is necessary to face the problem of safety that is connected with the possibility of firing and explosion of the mixture.

In fact, it should be pointed out that under particular conditions, the metallic powder can store electric charges tending to suddenly discharge when the potential overcomes a threshold value defined by the insulating value of the environment around the particles themselves.

In particular, the aluminium powders at particular concentrations and in the air generate potentially explosive mixtures and the discharges possibly generated can represent the mixture primer and cause explosion.

It should be noted in this respect that when the operations for mixing powder paints and exalting agent are carried out, these conditions can often occur.

In addition, in the case of aluminium, it is to be pointed out that this metal, in the presence of water, generates hydrogen vapours that are also inflammable at room temperature and pressure.

To obviate the above mentioned drawbacks in plants presently used, an operation to make said plants inert is carried out by forced insertion of nitrogen into the mixture or blend tank so as to eliminate the oxygen present therein, thereby drastically reducing the possibilities of an explosive reaction.

Therefore, once the powder paint and powder aluminium have been added, the mixer is made inert by means of nitrogen.

Once set in operation, the mixer is allowed to operate for the required time in order to obtain the desired dispersion and homogenisation of the goods and then an unloading step takes place with screening of the product for subsequent packaging.

The batch system presently used and described above however has some limits and/or operating drawbacks.

It should be noted first of all that the results of the batch process are greatly connected with the ability and skill of the human staff in particular during the mixture preparation steps. The staff's ability in fact greatly affects the quality of the obtained product.

In addition for this type of working, plants of large sizes are required which will bring about motors of great bulkiness and high energy consumption.

It is also apparent that at the end of the mixing procedure, time is required for cleaning the inner surfaces of the mixer with an important use of work force.

In addition, due to the need to make the work atmosphere inert in case of use of metals, great attention is to be paid as regards the above mentioned safety problems.

It is also to be pointed out that the batch system has a very low flexibility. In fact, it is not generally possible to produce limited amounts of a particular paint, i.e. it is not generally possible to work small amounts of powder paint. In fact, this could involve operation of the mixer with non-optimal operating parameters and consequent great increases in costs, and can also give rise to low quality yields.

Accordingly, the present invention aims at substantially solving all the above mentioned drawbacks.

It is a first aim of the invention to greatly increase the operating flexibility of the process.

Another aim of the invention is to greatly reduce the time for cleaning the plant and to make the process as safe as possible.

A further aim of the invention is to minimise the human error in carrying out the process while at the same time greatly reducing the employed work force.

A still further aim of the invention is to create plants of more reduced sizes with less bulky motors, which will bring about energy saving.

The foregoing and further aims that will become more apparent in the course of the present specification are substantially achieved by a method of exalting powder paints in accordance with the features recited in the appended claims.

Further features and advantages will be best understood from the detailed description of a preferred but not exclusive embodiment of a method of exalting powder paints in accordance with the present invention.

This description will be taken hereinafter with reference to the accompanying drawings, given by way of non-limiting example, in which:

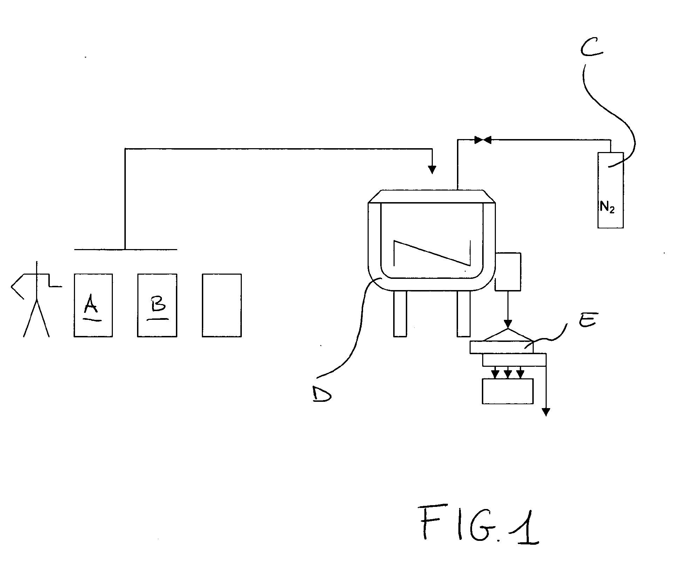

- Fig. 1 shows an exalting process using a batch system in accordance with the prior art; and
- Fig. 2 is a diagrammatic view of a plant for carrying out a continuous paint exalting process in accordance with the method of the present invention.

With reference to the drawings, a plant for exalting powder paints has been generally identified by reference numeral 1.

As already mentioned, by "powder paint exalting methods" are intended those methods aiming at enriching the appearance or quality of the paint giving it particular effects and/or properties.

Among the different possible effects, those having the greatest interest from a commercial point of view are connected with addition of an exalting agent (3; 16) such as micas and/or metallic pigments to the powder paint.

It is to be pointed out in any case that possible further effects and/or properties can be obtained with the aid of other different products such as glasses, quartzes, peeling agents, texturing agents, fluidifying agents, etc.

By the term "mica-effects" it is intended all those effects (brilliance, brightness. etc.) that can be reached when mica is provided to be added to the powder paint, said mineral giving a characteristic surface appearance to the goods.

It should be pointed out in this connection that micas can be coloured, neutral or special micas giving iridescent effects to the paints.

Vice versa by "metallised effect" it is intended all those effects obtained by addition of a powder metal adapted to give a metallised surface appearance to the paint.

The most commonly adopted powders are those of aluminium, bronze, copper, nickel and stainless steel.

Among the above mentioned products aluminium has a great importance and it substantially covers all grey metallic finishes.

The powder paint generally comprises a carrier or vehicle defined by thermosetting or thermoplastic resins among which polyester and/or epoxy and/or polyurethane and/or acrylic and/or silicone resins are to be mentioned.

In addition to the resin, the powder paint 2 also contains charges (fillers) such as titanium dioxide and/or calcium carbonate.

Then (organic or synthetic) pigments are present and several additives such as smoothing and spreading agents, UV stabilisers, etc.

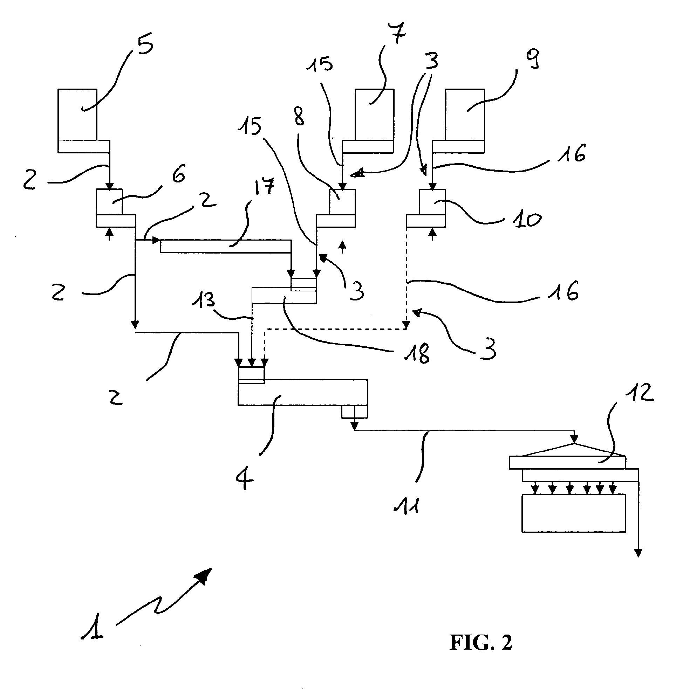

After the above statements and going back to the example in Fig. 2, it is possible to see that the exalting plant for powder paints first of all comprises a volumetric batching device 5 for powder paint.

In particular the volumetric batching device is a metering device capable of feeding a given product exclusively at a speed set by the operator; therefore in the volumetric batching device the flow rate is exclusively based on the free volume of the batching device.

The volumetric batching device 5 for powder paints 2 in turn feeds a second batching device 6 based on weight.

In particular the gravimetric weight batching system is a high-precision feeding system in which the product is automatically supplied and in which the mass flow is set by the operator, checks being carried out through weighing operations to ascertain that the amount supplied over time is correct.

In particular the weight batching device works through a "weight-loss system" and in detail, the batching device contents are weighed by means of a load cell and the system verifies whether the loss of weight over time is constant and equal to the value selected by the operator.

At all events when the weight contained in the batching system becomes poor, the same goes on operating in the volumetric mode while the volumetric reload batching device 5 carries out filling of the weight batching device 6 again.

Obviously, when the reloading step has been completed, the batching device 6 starts operating again in the gravimetric mode, while the batching device 5 stops.

The above mentioned batching devices 5 and 6 are adapted to enable correct feeding of powder paint to the subsequent devices.

In particular and still as can be viewed from Fig. 2, the powder paint 2 is continuously fed, along a first feeding line, directly to a mixing device 4.

In some installations however, the presence of the batching devices 5 and 6 can be avoided; in fact, for instance, mounting of the system downstream of a grinding plant allows a constant and controlled flow of ground powder paint to be received, which makes the presence of said batching devices 5 and 6 useless.

Part of the powder paint coming out of the weight batching device 6 (or directly coming out of the grinding plant) is taken up by a secondary line by an extractor/volumetric batching device 17 to be sent to a continuous pre-disperser 18.

Also provided in the plant is the presence of another volumetric batching device 7 and a subsequent weight batching device 8 adapted to feed an exalting agent directly to the continuous pre-disperser 18.

In particular, the batching devices 7, 8 are adapted to feed and weight metallic pigments 15 in paste form. It is to be pointed out that by adopting metallic pigment pastes instead of metallic powders, the metal does not store electrostatic currents and therefore risks of explosion or inflammability that are typical of the metallic powders themselves are completely avoided.

In other words, adopting metallic pigment pastes enables working in an uncontrolled atmosphere under safety conditions.

The continuous pre-disperser 18 allows dispersion of the metallic paste within a prevailing mass of powder paint due to a high-speed mixing system.

The mixed compound 13 consisting of powder paints 2 and dispersed metallic paste 15 is then directly sent to the mixing device 4.

The production line for exalted paints may further comprise another volumetric batching device 9 and another weight batching device 10 adapted to directly feed the mixing device 4 with a further exalting agent 3 such as micas 16 for example.

Said micas once correctly metered are directly sent to the mixing device 4.

The mixing device 4 consists of a continuous turbomixer enabling continuous mixing therein of the components fed to the inlet, characterised by high mixing speeds capable of ensuring fine dispersion and homogenisation of the different components.

The exalted paint 11 thus obtained comes out of the continuous mixer 4 to reach a screen 12 and is then sent to the packaging station.

After the above description, the method of continuously exalting powder paints is the following.

The powder paint contained in the reloading volumetric batching device 5 is subsequently metered by the weight batching device 6 and then part of same is taken up from the flow of material coming out of the batching device 6 by means of the extractor/volumetric batching device 17 conveying it to the continuous pre-disperser 18.

The metallic paste (of aluminium for example) contained within the reloading volumetric batching device 7 is also metered by the weight batching device 8 and then fed to the pre-disperser 18.

A dispersion mixing is carried out within said pre-dispenser 18, i.e. the different flows of products are incorporated and dispersed into a common flow generated by union of same. In other words, the continuous pre-disperser 18 receives the two metered materials and disperses them therein obtaining a product rich in additives called "masterbatch".

The masterbatch 13 is then joined to the main flow of powder paint 2 coming from the weight batching device 6 and then homogenised by means of the continuous mixing device 4.

When the above mentioned products are concerned, it will be sufficient to use the batching devices 5 and 6 and the further batching devices 9 and 10, the two flows 2, 16 being directly conveyed to the continuous mixer 4.

During this operation the batching device 8 and extractor 17 will be maintained inactive.

Should hybrid products be manufactured that are generated through exalting with micas (and/or quartzes, glasses, peeling agents, glazing and fluidifying agents, etc.) and metallic pigments, the batching devices 6, 8 and 10 could be used simultaneously (with the respective reloading batching devices 6, 7, 9); in this case the different flows 2, 13 and 16 will be all directly conveyed to the mixing device 4.

At the end of all the above described operations, a screening step will be carried out at the screen 12 before the packaging step.

It is to be pointed out that the exalting method in accordance with the invention is a "dryblend" process; it is in particular a process for mixing solid materials in which dispersion is only among particles and therefore the different components are distributed in the overall mass in a homogeneous manner, but each particle is physically separated from the others.

"Dryblend" mixing is differentiated from "bonding" mixing since the latter is on the contrary characterised by a product blend having particles equitably distributed in the overall mass, but the various particles of the different components have been joined by a bonding process (in this particular case by a thermal effect) ensuring indivisibility of same in the subsequent operations.

In other words, microaggregates are obtained that are each made up of the individual compound units.

While the above method has been thought and put into practice for processes of the dryblend type, use of same in processes of the bonding type is also provided; in this case mixer 4 is provided with a hollow space in which circulation of a heating fluid occurs.

The invention achieves important advantages.

It should be pointed out first of all that due to a continuous process it is possible to obtain the maximum production flexibility.

In fact it will be possible to produce amounts of exalted paints that can be predetermined a priori and must not necessarily be large.

It will be also possible to feed the mixing device with a predetermined metallic paste and, once the required amount of metallised paint has been obtained, to go on producing another paint providing use of mica for example.

Possible errors in mixing the components can be quickly estimated and immediately corrected with small amounts of discarded products.

In addition, due to the possibility of working continuously, mixing devices of reduced sizes can be used with motors of small bulkiness, which will bring about energy saving.

The cleaning time is greatly reduced because the working volumes are reduced (as well as the risk of contamination).

Due to use of given metallic pastes, the process is safe without requiring expensive inactivation plants.

Since the weight batching devices prepare the blend flow to be mixed in an automatic manner and in the right proportions, the human error is reduced to the minimum and the use of work force is reduced as well.

## Claims

1. A method of exalting powder paints comprising the following steps:
- providing a suitable powder paint (2);
- providing a predetermined amount of exalting agent (3) adapted to enrich the paint appearance giving it particular effects, the exalting agent (3) preferably comprising metallising agents such as aluminium, bronze, copper, nickel, stainless steel, and/or micas, quartzes, glass, etc. (16), **characterised in that** it further comprises the following steps:
- continuously feeding a mixing device (4) with said powder paint (2); and
- simultaneously and continuously feeding the mixing device (4) with said exalting agent (16) and/or with said exalting agent (3) pre-mixed with powder paint (2).

2. A method as claimed in claim 1, **characterised in that** it comprises a step of feeding powder paint (2) in a controlled manner by weight batching.

3. A method as claimed in claim 2, **characterised in that** the controlled-feeding step comprises a first sub-step of volumetric batching by a first batching device (5) and a second sub-step, following the first one, of weight batching by a second batching device (6), the powder paint (2) thus metered being then sent to the entry of the mixing device (4).

4. A method as claimed in anyone of the preceding claims, **characterised in that** it comprises a step of feeding the exalting agent (3; 16) in a controlled manner by weight batching.

5. A method as claimed in claim 4, **characterised in that** said controlled-feeding step comprises a first sub-step of volumetric batching by a first batching device (7; 9) and a second sub-step, following the first one, of weight batching by a second batching device (8; 10), the exalting agent (3; 16) thus provided being then sent to the entry of the mixing device (4) either directly or pre-mixed with powder paint.

6. A method as claimed in anyone of the preceding claims, **characterised in that** the mixing device (4) continuously receives the powder paint (2) and exalting agent (3; 16) while simultaneously mixing the powder paint (2) and exalting agent (3; 16), and supplies the exalted paint (11) out.

7. A method as claimed in anyone of the preceding claims, **characterised in that** it further comprises a step of continuously mixing the exalted paint (11) by the mixing device (4).

8. A method as claimed in anyone of the preceding claims, **characterised in that** it comprises a step of screening the exalted paint (11) by the screen (12), subsequently to discharging it from the mixing device.

9. A method as claimed in anyone of the preceding claims, **characterised in that** it further comprises the steps of:
- taking out a predetermined amount of powder paint (2) before feeding to the mixing device (4); and
- pre-dispersing the exalting agent (3) in said predetermined amount of powder paint (2) to obtain a compound (13) adapted to feed the mixing device (4).

10. A method as claimed in anyone of the preceding claims, **characterised in that** the step of providing an exalting agent (3) comprises provision of exalting agents made inert such as metallic powders in paste form (15), aluminium paste for example.

11. A method as claimed in anyone of the preceding claims, **characterised in that** it comprises a step of weight batching exalting agents (15) and/or a simultaneous step of weight batching other agents (16) and a step of continuously feeding the mixing device (4) with exalting agents (15) and/or a step of continuously feeding the mixing device (4) with other agents (16).

12. A method as claimed in anyone of the preceding claims, **characterised in that** it is a method of the "dry blend" type or of the "bonding" type.

13. A method of producing exalted powder paints, **characterised in that** it comprises:
- at least one batching device for powder paint or similar feeding system, for the flow of product from the grinding plant;
- at least one batching device (7; 8; 9; 10) for an exalting agent (3; 16) adapted to enrich the appearance and/or quality of the paint giving it particular aesthetic and/or physico-chemical effects;
- a continuous-mixing device (4) receiving the incoming powder paint (2) and exalting agent (16) or the incoming exalting agent (3) pre-mixed with the powder paint (2), said mixing device (4) continuously emitting an exalted paint (11).

14. A plant as claimed in claim 1, **characterised in that** it further comprises an extractor/batching device (17) adapted to take up part of the powder paint (2) coming out of the batching device (5; 6) and send it to a pre-disperser (18), the pre-disperser (18) also receiving a metallic powder in paste form (15) at the entry and supplying a compound (13) adapted to feed the mixing device (4), at the exit.
